# EUROPEAN PATENT SPECIFICATION

(11) **EP 0 525 094 B1**
(45) Date of publication and mention of the grant of the patent: **09.11.1994**
(21) Application number: 91908751.0
(22) Date of filing: 14.02.1991
(51) Int. Cl.: C08F 255/02, C08F 263/04

(54) **FLAME RETARDANT GRAFT COPOLYMERS OF ETHYLENE VINYL ACETATE**
FLAMMHEMMENDE PFROPFPOLYMERISIERTE AUF BASIS VON ÄTHYLEN-VINYLACETAT
COPOLYMERES GREFFES IGNIFUGES D'ETHYLENE-ACETATE DE VINYLE

(30) Priority: 17.04.1990 US 510055
(43) Date of publication of application: 03.02.1993
(73) Proprietor: GREAT LAKES CHEMICAL CORPORATION, West Lafayette Indiana 47906 (US)
(72) Inventor: ATWELL, Ray, W., West Lafayette, IN 47906 (US); FAVSTRITSKY, Nicolai, A., Lafayette, IN 47905 (US); STALLINGS, John, P., Lafayette, IN 47905 (US); TERMINE, Enrico, J., Lafayette, IN 47905 (US)
(74) Representative: Atkinson, Peter Birch
(86) International application number: US9100998
(87) International publication number: WO9116366

(56) References cited:
- DE-A- 1 923 505
- US-A- 4 279 808

## Description

### BACKGROUND OF THE INVENTION

This invention resides in the field of flame retardant ethylene-vinyl acetate copolymers (EVA). More particularly, it relates to flame retardant polymer compositions which include graft copolymers of ethylene vinyl acetate and brominated vinyl aromatics such as brominated styrenes, and to methods for making these compositions.

By way of background, ethylene vinyl acetate has a variety of known applications, including use in hot melt and pressure-sensitive adhesives, impact modifiers in other plastics, coatings and the like. However, while EVA has excellent properties for these uses, it has less than desirable flame retardancy for certain applications. In view of its other advantageous physical properties, it has naturally been a matter of great interest to provide ethylene vinyl acetate copolymer compositions having improved flame retardancy. However, it is also important that the EVA composition retain its other desirable physical properties.

One approach to improving the properties of EVA has involved preparing modified forms of EVA. For example, the preparation of a terpolymer of ethylene, vinyl acetate and isobutylene is discussed in United States Patent No. 4,689,370, issued to Pritchett et al. on August 25, 1987. The terpolymer is halogenated by direct contact with a halogen or a halogen donor. The resulting product is described as having increased heat stability. The Pritchett patent also indicates that heat stabilizers are frequently added to ethylene vinyl acetate copolymers before processing to improve heat stability, and that it is desirable to produce a product exhibiting a thermal stability superior to that of conventional chlorinated ethylene vinyl acetate copolymers.

An alternate approach to improving flame retardancy of EVA compositions has beer, the use of additives. Numerous additives for increasing the flame retardancy of ethylene vinyl acetate have been studied, and some are commercially available. Nonetheless, such flame retardant additives generally suffer from one or more of the following disadvantages: adverse affect on the physical property of EVA, lack of high thermal stability, migration or "bloom" of additive to the surface, and/or presence of solids at processing temperatures. The bloom of inert additive-type flame retardants to the surface of molded articles leads to unsightly surface discoloration. Inert additives which remain solid at processing temperatures can be a detriment in certain types of processing. The modified EVA of the present invention does not have these problems.

The applicants' preferred modified EVA also is advantageous in having only low levels of unreacted graft monomer, typically less than 1% by weight. By this aspect, the invention avoids monomer juicing problems known to occur in prior art graft modified compositions. It is also significant that the compositions of the present invention can therefore be efficiently processed without the release of excessive volatile monomer into the surrounding environment. The prior art has failed to appreciate these substantial advantages of the compositions of the present invention.

In United States Patent No. 4,279,808, issued to Hornbaker et al. on July 21, 1981, there is described a method for the preparation of polybromostyrene resin by the addition polymerization of nuclear brominated styrene. The Hornbaker et al. patent is limited to the addition polymerization of bromostyrene in the presence of specified rubbery polymers, namely SBR rubber (butadiene-styrene copolymers), EPR rubber (ethylenepropylene copolymers), EPDM rubber (i.e. terpolymers of ethylene, propylene and a diene monomer), polyisoprene rubber (e.g. cis-1,4-polyisoprene and trans-1,4-polyisoprene), Neoprene (i.e. polymers and copolymers of 2-chloro-1,3-butadiene), cis-1,4-polybutadiene, and polybutadienes having mixed structures (e.g. cis-1,4; trans-1,4 and 1,2 structures), with the polybutadienes being particularly preferred.

Outside of the field of flame retardancy, various modifications to polyolefins have been proposed. For example, U.S. Patent No. 3,177,270, issued to Jones et al. on April 6, 1965, describes a method for modifying polyethylene and other substrates for the purpose of improving tensile strength, elongation and/or flexural modulus. The Jones et al. patent specifically describes the preparation of ethylene polymer which is modified with styrene, a styrene/acrylonitrile mixture, dichlorostyrene or a mixture of isomeric vinyltoluenes. The Jones et al. patent additionally lists other possible polymeric substrates for use in the described method as including polypropylene, polyisobutylene, polybutene, and copolymers of ethylene and propylene, ethylene and isobutylene, and ethylene and butene. The patent indicates that other copolymers that can be used include those containing a predominant amount of one or more aliphatic olefins chemically combined or interpolymerized with a minor proportion of another monoethylenically unsaturated organic compound, such as copolymers of a predominant amount of ethylene and a minor proportion of styrene, vinyl acetate or methyl methacrylate. Possible graft monomers are listed as including styrene, vinyltoluene, vinylxylene, ethylvinylbenzene, isopropyl styrene, para-tert-butyl styrene, dichlorostyrene, bromostyrene, fluorostyrene, or mixtures thereof with acrylic acid, methacrylic acid, acrylonitrile, methacrylonitrile, methyl methacrylate or maleic anhydride.

As is evident from the foregoing, past efforts to provide an ethylene vinyl acetate composition with improved flame retardancy have not been fully satisfactory. Available inert flame retarding additives have exhibited drawbacks such as bloom and interference with desired physical properties. Additionally, EVA materials have not been provided with grafted fire retardants which perform as well as the present inventive compositions. Accordingly, there has remained a need for fire retardant EVA compositions demonstrating good physical properties, and the applicants' invention addresses this need.

### SUMMARY OF THE INVENTION

Accordingly, a first preferred embodiment of this invention provides a flame retardant graft copolymer composition comprising: 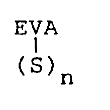
in which n is an integer > 1, EVA is ethylene-vinyl acetate copolymer, and S is a side chain grafted to the EVA and having brominated monomeric units of the formula: 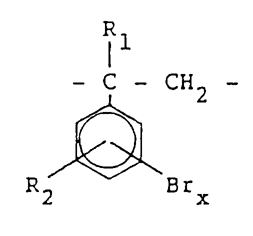
wherein x = 1 to 4, R₁ is H or CH₃, and R₂ is H or a C₁₋₄ lower alkyl group. In an alternate embodiment, the composition additionally includes a homopolymer of the brominated monomeric units.

Another preferred embodiment of this invention provides a flame retardant polymer composition comprising a blend of (i) ethylene-vinyl acetate copolymer, and (ii) a polymer composition including a graft copolymer according to the first embodiment above and constituted about 10% to about 60% bromine by weight. Such a blend can be prepared by diluting or "letting down" the bromine-concentrated polymer composition (ii) with a desired amount of ethylene vinyl acetate. After let down, the blend preferably comprises about 15% to about 45% bromine by weight of the blend.

Another preferred embodiment of this invention provides a method for producing a flame retardant polymer composition which comprises the step of graft polymerizing ethylene vinyl acetate with a monomer having the formula: 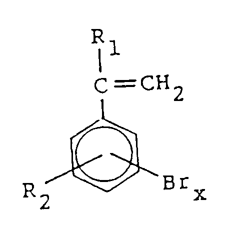
wherein x = 1 to 4, R₁ is H or CH₃, and R₂ is H or a C₁₋₄ lower alkyl group. The method provides a flame retarding amount of bromine in the graft polymerization product.

One object of this invention is to provide flame retardant EVA-based polymer compositions.

Another object of this invention is to provide a method for producing flame retardant EVA-based polymer compositions.

Additional objects and advantages will be apparent from the description which follows.

### DESCRIPTION OF THE PREFERRED EMBODIMENTS

For the purposes of promoting an understanding of the principles of the invention, reference will now be made to preferred embodiments of the invention and specific language will be used to describe the same. It will nevertheless be understood that no limitation of the scope of the invention is thereby intended, such alterations, further modifications and applications of the principles of the invention as described herein being contemplated as would normally occur to one skilled in the art to which the invention relates.

The present invention provides compositions which have physical properties comparable to that of ethylene vinyl acetate, but which have improved flame retardancy. In the broadest sense, ethylene vinyl acetate is modified by grafting a ring-brominated vinyl aromatic onto the ethylene vinyl acetate. The presence of the bromine contributes to the flame retardancy of the resulting polymer. In contrast to the prior art, a significant portion of the bromine present in the compositions of the present invention is grafted onto the ethylene vinyl acetate through the monomeric unit. In addition, it is contemplated that the final compositions may also include bromine in the form of homopolymers of the monomer used in grafting the ethylene vinyl acetate. Although not to be considered limiting of the present invention, it is believed that the compatibility of the grafted ethylene vinyl acetate and the homopolymer contributes to the desirable physical properties of the resulting composition.

In accordance with the above discussion, one embodiment of this invention includes a flame retardant polymer composition comprising a graft copolymer represented by the formula: 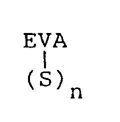
in which n is an integer > 1, EVA is ethylene vinyl acetate copolymer, and S is a side chain grafted to the EVA and having monomeric units of the formula: 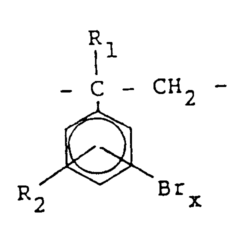
wherein x = 1 to 4, R₁ is H or CH₃, and R₂ is H or a C₁₋₄ lower alkyl group.

The graft copolymer includes at least about 1% bromine by weight of the graft copolymer. In certain aspects, the graft copolymer comprises about 1% to about 60% by weight bromine. In providing the grafted side chain(s) having brominated monomer units, there may be present unreacted brominated monomer corresponding to the brominated monomeric units. In this event, the overall composition including graft copolymer and unreacted brominated monomer preferably contains at most about 3% by weight of the unreacted brominated monomer. The composition may also include a homopolymer of the brominated monomeric units, in which event the overall composition preferably includes at most about 3% by weight of unreacted brominated monomer.

The ethylene vinyl acetate used in the present invention is not critical so long as it undergoes suitable graft polymerization to yield the indicated compositions. The composition of EVA may vary from 5-95% ethylene and 95-5% vinyl acetate. For example, a suitable EVA is one available under the trademark "ULTRATHENE UE-639-35", produced by Quantum, USI Division. This copolymer has about 72% ethylene and about 28% vinyl acetate. EVA copolymers having melt indices of 2-4000 (ASTM D-1238, 190°C, 2.16 kg) are useful for the grafting reaction. The preferred ethylene vinyl acetate has a vinyl acetate content of about 18-33%, and has a melt index of 100-500.

The ethylene vinyl acetate is graft polymerized with a ring-brominated vinyl aromatic which is also optionally alpha- or ring-substituted with one or more aliphatic groups including lower alkyl groups such as methyl, ethyl, and propyl and butyl isomers. This monomer is preferably a styrene having 1 to 4 ring-substituted bromines. However, it will be appreciated that other monovinyl aromatics, as described, function similarly to styrene in grafting procedures and are accordingly also within the scope of this invention. In this vein, methyl is a preferred optional alpha-substituted alkyl group and C₁₋₄ lower alkyls are preferred optional ring-substituted alkyl groups. Corresponding chlorinated styrenes are also useful.

Accordingly, preferred brominated monomers suitable for the graft polymerization process have the formula: 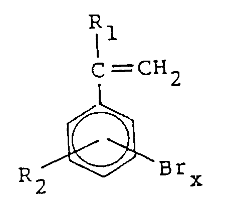
wherein x = 1 to 4, R₁ is H or CH₃, and R₂ is H or a C₁₋₄ lower alkyl group.

In accordance with this formula the preferred styrene monomer has 1 to 4 bromines per styrene. Also useful are mixtures containing these mono-, di-, tri-, and/or tetrabromostyrenes. It is desirable that the monomer material used for the graft polymerization be liquid at room temperature (about 25°C). Mixtures may accordingly be used which are liquid at room temperature and which have styrenes with varying degrees of bromination to achieve a high percentage of bromine in the monomer material.

Pentabromostyrene is not a preferred styrene monomer. In experiments using pentabromostyrene a suitable grafting of the ethylene vinyl acetate did not result. In this regard, pentabromostyrene (30 g), EVA (30 g) and dicumyl peroxide (0.6 g) were fluxed at 180°C in a small Brabender mixer for seven minutes. A GC analysis of the mixture showed that 77.4% of the pentabromostyrene failed to graft to the ethylene vinyl acetate.

In another aspect, it is preferred that the stated levels of bromine be achieved with at least about 85% of the brominated monomeric units being di-, tri- or tetrabromo units or mixtures thereof i.e., at least about 85% of the brominated monomeric units have formulas wherein x = 2, 3 or 4. The most preferred monomer is dibromostyrene, and preferably at least about 80% of the brominated monomeric units are dibromo units. In commercial form dibromostyrene commonly includes minor levels of mono- and tribromostyrene. For example, the applicants have used dibromostyrene commercially available from Great Lakes Chemical Corporation of West Lafayette, Indiana. This commercial dibromostyrene has contained about 15-18% monobromostyrene and about 3% tribromostyrene by weight, and overall includes about 99.6% brominated styrenes. The preferred styrene monomer may also contain other, non-interfering materials, such as storage stabilizers known and used in this field to inhibit premature polymerization. As examples, these commonly include phenols and compounds of sulfur, nitrogen and phosphorous.

The ring-brominated vinyl aromatic is grafted to the ethylene vinyl acetate base using suitable known graft polymerization techniques which may be performed, for example, in solution, suspension, emulsion or bulk procedures. Such grafting techniques include irradiation, peroxidation by exposure to oxygen at elevated temperatures, and abstraction of protons by free radical initiators. Among these, the latter technique is preferred, with appropriate free radical initiators including organic peroxides such as dicumyl peroxide, di-t-butyl peroxide, t-butylperbenzoate and t-butyl hydroperoxide.

Typically, the EVA grafts are prepared in a Brabender large bowl heated mixer or extruder. The EVA is charged to the bowl, mixed and fluxed at 170°C. The dibromostyrene (DBS) is then added at 10-400% based on weight of the EVA, the preferred concentration being 30-300%. The initiator organic peroxide and a chain transfer agent may be dissolved in the DBS. Typically, 1-5% each of peroxide and chain transfer agent is dissolved in the DBS, with 2% of each being preferred.

The resulting solution is then added to agitated molten ethylene vinyl acetate. In this regard, the grafting is preferably performed in a kneading type mixer such as a Banbury mixer, or in an extruder or a two-roll mill, although other suitable mixers known in the art can also be used.

Additionally, the grafting is carried out at a suitable pressure and temperature and for a duration sufficient to yield the desired end product. The grafting proceeds readily at atmospheric pressure, as well as at the elevated pressures encountered in commonly used plastics processing equipment. Generally, the temperature will be elevated sufficiently to reduce the viscosity of the molten ethylene vinyl acetate and to ensure thorough mixing. Moreover, where free radical initiators are used, this temperature will be high enough to promote decomposition of the initiator resulting in rapid polymerization of the monomer. Reaction temperatures may, for example, be in the range of 50-300°C, depending on the initiator half life. For instance, dicumyl peroxide has a 10 minute half life at 155°C and a one minute half life at 180°C, and using temperatures of 150-180°C gives the desired DBS grafted EVA with dicumyl peroxide.

The duration of the grafting procedure will depend upon the temperature as well as the grafting technique used. In free radical initiated grafting, the duration will also depend upon the chosen initiator and the efficiency of mixing. Generally, however, durations ranging from about 1 second to several hours can be used, with about 10 to about 300 seconds resulting in an efficient polymerization. By way of example, with 2% dicumyl peroxide in DBS, the reaction is complete in 0.5-10 minutes in a bowl mixer at 150°C, and is completed in less than 30 seconds residence time in a 30 mm Werner and Pfleiderer twin screw extruder.

It is an aspect of the present invention that the monomer is indeed grafted onto the EVA backbone, although homopolymer will also typically be present. This has been demonstrated in the following manner. A 50/50 dibromostyrene-EVA graft copolymer (by weight), prepared as described in the examples hereafter, was melted and stirred at 195°C and allowed to stand at that temperature for seven hours. Each of the top, middle and bottom of the material was analyzed and found to contain 28% Br +/- 0.07%. In contrast, a 50/50 (by weight) mixture of polydibromostyrene (PDBS) and EVA were melted and stirred together at 195°C. After standing at 195°C for seven hours, two distinct phases were evident. The top phase was found to contain 5.1% Br, and the bottom phase contained 55.2% Br. This indicates that about 94% of the PDBS had separated from the EVA and that the two polymers were largely immiscible in each other.

As another demonstration of the grafting of, for example, the dibromostyrene onto EVA, the following experiment was conducted. First, it was determined that EVA dissolved in cyclohexane at a level of 2% EVA (by weight of cyclohexane), and that 2% polydibromostyrene was completely insoluble in cyclohexane. A mixture of cyclohexane and 2% each of polydibromostyrene and EVA was allowed to stand two days and was then filtered. The filtrate contained less than 0.05% Br (versus a theoretical 1.13%), indicating little if any dissolution of the polydibromostyrene. By comparison, the graft copolymer prepared according to the present invention was finely dispersed in cyclohexane at a level of 4% copolymer by weight of cyclohexane. The mixture was allowed to stand for two days, and was then filtered. The filtrate contained 0.43% Br (versus a theoretical 1.13%), indicating about 38% of the graft copolymer had dissolved under the conditions used. From these solubility experiments it is shown that the DBS/EVA graft copolymer is a distinct material, and is unlike a simple mixture of polydibromostyrene and EVA.

Graft polymerization will typically result in the production both of grafted ethylene vinyl acetate and of homopolymer of the selected monomer. It has been found that the grafted ethylene vinyl acetate and any homopolymer present remain well intermixed, even during processing. The homopolymer could alternatively be removed, but this is not necessary and the preferred composition therefore includes both grafted ethylene vinyl acetate and homopolymer.

The present invention provides polymer compositions having a flame retarding amount of bromine, about 1 weight % or more, based on the weight of the overall composition. This bromine may be present either in the grafted ethylene vinyl acetate or in a homopolymer mixed with the grafted ethylene vinyl acetate. In any event, however, the grafted ethylene vinyl acetate copolymer includes at least about 0.5%, and more preferably at least about 1%, bromine by weight. In use, the preferred flame retardant polymer compositions of the invention will generally include about 5% to about 50% bromine by weight of the composition, and more preferably about 15% to about 45% bromine by weight.

In another preferred embodiment of the invention, a bromine-concentrated polymer composition is provided having about 10% to about 60% bromine by weight, or more preferably about 30% to about 50% bromine by weight, of the overall product. In this embodiment, the grafted ethylene vinyl acetate copolymer preferably includes at least about 5% bromine by weight for the broad range, and at least about 15% for the more preferred range. This composition can thereafter be let down with ethylene vinyl acetate prior to processing to yield a resulting composition having an appropriate level within the 5% to 50% or more preferred 15% to 45% bromine range. The composition may therefore comprise ethylene vinyl acetate blended with the graft copolymer of EVA. In this case, the graft copolymer includes at least about 5% bromine by weight of the graft copolymer, and the overall composition contains at least about 1% bromine by weight of the overall composition. Such let down blends preferably include about 5% to about 50% bromine by weight of the overall composition. Such compositions nay additionally include a homopolymer of the brominated monomeric units, in which the graft copolymer and the homopolymer together comprise preferably about 10% to about 60% by weight bromine.

A certain amount of bromine may also be present as a part of unreacted monomer, but this form is not preferred and the amount of unreacted monomer is desired to be relatively low. This will prevent or minimize juicing, i,e., migration of the monomer to the surface. The amount of unreacted monomer is preferably at most about 3% by weight, and more preferably at most about 1% by weight, of the overall composition. These low levels are generally achieved in the preferred products without the need for further processing steps. However, when desired the unreacted monomer can be removed, for example, by placing the graft polymerization products under vacuum.

The let down blends and other polymer compositions of the present invention have demonstrated excellent flame retarding properties. In addition, the compositions of the invention have demonstrated excellent physical properties. The combination of improved flame retardancy and desirable physical properties, especially without the bloom, juicing, etc. found in prior art approaches, provides a significant and unexpected advantage, and highlights the magnitude of the applicants' discoveries. The novel graft copolymers are useful as hot melt adhesives, or as mixtures in adhesive formulations. They are also useful as impact modifiers and flame retardants in other plastics, such as polyethylene, polypropylene and polyvinylchloride.

Additional materials which do not significantly interfere with the grafting procedure or with the resulting products can also be used as known in the art or determined by routine experimentation. For instance, reactive additives including chain transfer agents, such as 1-dodecanethiol, can be dissolved into the brominated monomer, prior to grafting, to control the molecular weight of the brominated graft component. Alkyl halides, amines, esters, ketones and mercaptans, for example, are also suitable chain transfer agents for limiting the extent of styrene polymerization, and thus the molecular weight of the styrene polymer chains. By controlling the molecular weight, the flow characteristics of the composition can be matched to differing applications such as use in adhesives versus use as a wire coating or impact modifier. As previously indicated, the product of the graft polymerization will normally contain brominated styrene polymer grafted to the ethylene vinyl acetate as well as brominated styrene homopolymer resulting from separate polymerization of the monomer. The chain transfer agent can be used to regulate the molecular weight of each.

Other reactive unsaturated comonomers can also be included during the grafting process to modify the properties of the resultant polymer composition. These can include maleic anhydride, styrene, chloromethylstyrene, acrylonitrile, methylmethacrylate, acrylic acid, butene, butadiene, acrylamide and many others as known in the art. Modifications which can be achieved by addition of other materials during the grafting process include alterations in color, clarity, lubricity, dyability, melt viscosity, softening point, thermal stability, ultraviolet stability, viscoelastic behavior, polarity, biodegradability, static charge dissipation, strength and stiffness.

Nonreactive materials can also be included in the grafting procedure to modify product properties. As examples, antioxidants, ultraviolet absorbers, antistatic agents, pigments, dyes, nucleating agents, fillers, slip agents, lubricants, antiblocking agents, plasticizers, and/or antimicrobials can be included. These materials can be incorporated into the ethylene vinyl acetate prior to or during the grafting process. Alternatively, these materials can be added in a separate compounding step, which provides the advantage of avoiding possible interference by these additives with the grafting chemistry.

Other flame retardants (aside from the brominated styrene grafts) can also be included in the graft polymerization product. These may be reactive flame retardants such as bis(2-chloroethyl)vinylphosphonate or acrylic acid esters of halogenated alcohols, or inert flame retardants such as antimony oxide, triphenylphosphate, or hexabromocyclododecane.

The invention will be further described with reference to the following specific Examples. However, it will be understood that these Examples are illustrative and not restrictive in nature. In the following Examples, percents indicated are percents by weight unless indicated otherwise.

### EXAMPLE 1

Grafting of dibromostyrene onto ethylene vinyl acetate copolymer was accomplished as follows. EVA (150g) was charged to a large Brabender bowl mixer at 170°C and at 35 rpm. Dibromostyrene, containing dicumyl peroxide and 1-dodecanethiol, in amounts indicated in Table 1, was added over a fifteen minute period, and the batch was then discharged. Physical properties of the resulting compositions were determined, and are also listed in Table 1.

**Table 1**

| DBS/EVA Grafts | | | | | | |
|---|---|---|---|---|---|---|
| % EVA | %Dicumyl Peroxide | %DDT³ | %DBS⁴ | MFI⁵ | Br(%) | OI(%)⁶ |
| 100¹ | -- | -- | -- | 10.2 | 0 | 19 |
| 50¹ | 0.5 | -- | 49.5 | No flow | 29 | 23 |
| 50¹ | 0.5 | 0.5 | 49.0 | .7 | 29 | 23 |
| 50¹ | 0.5 | 1.0 | 48.5 | 1.3 | 29 | 23 |
| 50¹ | 0.5 | 1.5 | 48.0 | 2.3 | 29 | 23 |
| 100² | -- | -- | -- | 2.6 | 0 | 19 |
| 50² | 0.5 | 0 | 49.5 | No flow | 29 | 23 |
| 50² | 0.5 | 0.5 | 49.0 | .2 | 29 | 23 |
| 50² | 0.5 | 1.0 | 48.5 | 0.6 | 29 | 23 |
| 50² | 0.5 | 1.5 | 48.0 | 0.7 | 29 | 23 |

| | | | | | | |
|---|---|---|---|---|---|---|
| ¹ Elvax 410 EVA, 18% vinyl acetate, 500 melt index manufactured by DuPont. | | | | | | |
| ² Ultrathene UE 639-35 28% vinyl acetate, 150 melt index, manufactured by Quantum Div. USI. | | | | | | |
| ³ DDT: 1-Dodecanethiol. | | | | | | |
| ⁴ DBS: Dibromostyrene. | | | | | | |
| ⁵ Measured at 125°C under 325g load. | | | | | | |
| ⁶ Oxygen Index, ASTM D 2863-77. | | | | | | |

### EXAMPLE 2

A mixture of ungrafted Elvax 410 and a 1:1 graft copolymer of DBS on Elvax 410 was prepared by melt blending 50g of each at 180°C. After heating for 1.5 hours, the mixture was molten and was stirred vigorously. The homogeneous mixture was poured onto a Teflon sheet, cooled and removed for tests. The melt flow index (125°C/325g load) of the blend was 4.7g/10 minutes, and its Oxygen Index was 21.0.

### EXAMPLE 3

Known graft polymerization procedures are used to graft Great Lakes Dibromostyrene to ethylene vinyl acetate in amounts whereby the graft polymerization products comprise about 1% to about 60% by weight bromine. Similar results are obtained as in Table 1, yielding compositions substantially retaining the physical properties of EVA, but having increased flame retardancy.

### EXAMPLE 4

The graft polymerization products of Example 3 having about 10% to about 60% by weight bromine are blended with ethylene vinyl acetate copolymer by conventional means to achieve bromine levels in the final blend ranging from about 5% to about 50%, and in specific instances ranging from about 15% to about 45%, by weight bromine. Blend compositions demonstrating good physical properties together with increased flame retardancy are obtained.

While the invention has been described in detail in the foregoing description and its specific Examples, the same is to be considered as illustrative and not restrictive in character. It is to be understood that only the preferred embodiments have been described, and that all changes and modifications that come within the spirit of the invention are desired to be protected.

## Claims (Claims for the following Contracting State(s): AT, BE, CH, DE, DK, FR, GB, GR, IT, LI, LU, NL, SE)

1. A flame retardant polymer composition comprising a graft copolymer having the formula: 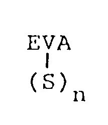 wherein n is > 1, EVA is an ethylene-vinyl acetate copolymer, and S is a grafted side chain having brominated monomeric units of the formula: 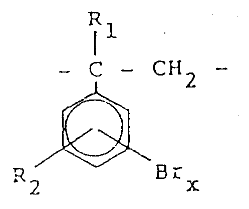 wherein x = 1 to 4, R₁ is H or CH₃, and R₂ is H or a C₁₋₄ lower alkyl group, said graft copolymer including at least about 1% bromine by weight of the graft copolymer.

2. The flame retardant polymer composition of claim 1 and comprising about 1% to about 60% by weight bromine.

3. The flame retardant polymer composition of claim 2 and comprising about 15% to about 45% by weight bromine.

4. The flame retardant polymer composition of claim 1 containing at most about 3% by weight of unreacted brominated monomer corresponding to the brominated monomeric units.

5. The flame retardant polymer composition of claim 1 in which R₁ and R₂ are each hydrogen.

6. The flame retardant polymer composition of claim 1 in which at least about 80% of said brominated monomeric units have formulas wherein x = 2.

7. A flame retardant polymer composition comprising:
(a) a graft copolymer represented by the formula: 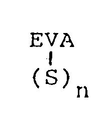 wherein n is > 1, EVA is an ethylene-vinyl acetate copolymer, and S is a grafted side chain having brominated monomeric units of the formula: 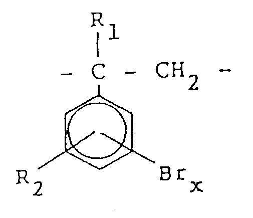 wherein x = 1 to 4, R₁ is H or CH₃, and R₂ is H or a C₁₋₄ lower alkyl group, said graft copolymer including at least about 0.5% bromine by weight of graft copolymer; and
(b) a homopolymer of said brominated monomeric units, said graft copolymer and said homopolymer together including at least about 1% bromine by weight of the overall polymer composition.

8. The flame retardant polymer composition of claim 7 and containing at most about 3% by weight of unreacted brominated monomer corresponding to the brominated monomeric units.

9. The flame retardant polymer composition of claim 7 and comprising about 15% to about 45% bromine by weight of the overall polymer composition.

10. The flame retardant polymer composition of claim 7 in which R₁ and R₂ are each hydrogen.

11. The flame retardant polymer composition of claim 7 in which at least about 85% of said brominated monomeric units have formulas wherein x = 2, 3 or 4.

12. A flame retardant polymer composition comprising a blend of:
(i) ethylene vinyl acetate; and
(ii) a bromine-concentrated polymer composition, said bromine-concentrated polymer composition including about 10% to about 60% bromine by weight and including a graft copolymer represented by the formula: 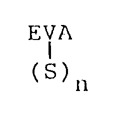 wherein n is > 1, EVA is an ethylene-vinyl acetate copolymer, and S is a grafted side chain having brominated monomeric units of the formula: 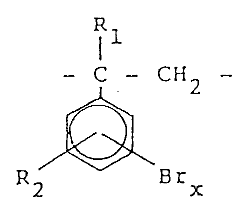 wherein x = 1 to 4, R₁ is H or CH₃, and R₂ is H or a C₁₋₄ lower alkyl group, said graft copolymer including at least about 5% bromine by weight of graft copolymer, said polymer composition containing at least about 1% bromine by weight of the overall polymer composition.

13. The flame retardant polymer composition of claim 12 and which includes about 5% to about 50% bromine by weight of the overall polymer composition.

14. The flame retardant polymer composition of claim 12 in which said bromine-concentrated polymer composition also includes a homopolymer having said brominated monomeric units, said graft copolymer and said homopolymer together providing the about 10% to about 60% by weight bromine of the bromine-concentrated polymer composition.

15. The flame retardant polymer composition of claim 14 in which R₁ and R₂ are each H.

## Claims (Claims for the following Contracting State(s): ES)

1. A process for the preparation of a flame retardant polymer composition which includes a graft copolymer having the formula: 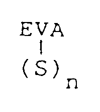 wherein n is greater than 1, EVA is an ethylene-vinyl acetate copolymer, and S is a grafted side chain having brominated monomeric units of the formula: 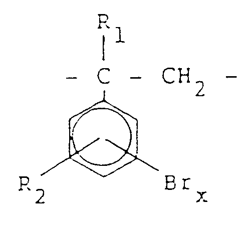 wherein x = 1 to 4, R₁ is H or CH₃, and R₂ is H or a C₁₋₄ lower alkyl group, said graft copolymer including at least about 1% bromine by weight of the graft copolymer, which process comprises reacting an ethylene vinyl acetate copolymer with a ring brominated vinyl aromatic monomer having the formula: 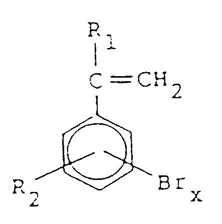 wherein x = 1 to 4, R₁ is H or CH₃, and R₂ is H or a C₁₋₄ lower alkyl group.

2. The process of claim 1, which produces a flame retardant polymer composition containing from about 1% to about 60% by weight bromine.

3. The process of claim 2, which produces a flame retardant polymer composition containing from about 15% to about 45% by weight bromine.

4. The process of claim 1, which produces a flame retardant polymer composition containing at most about 3% by weight of unreacted brominated monomer corresponding to the brominated monomeric units.

5. The process of claim 1, in which R₁ and R₂ are each hydrogen.

6. The process of claim 1, which produces a flame retardant polymer composition in which at least about 80% of said brominated monomeric units have formulae wherein x = 2.

7. A process for the preparation of a flame retardant polymer composition which includes:
(a) a graft copolymer represented by the formula: 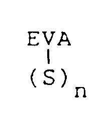 wherein n is greater than 1, EVA is an ethylene-vinyl acetate copolymer, and S is a grafted side chain having brominated monomeric units of the formula: 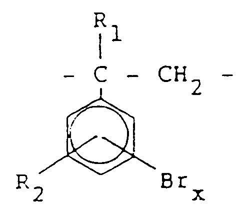 wherein x = 1 to 4, R₁ is H or CH₃, and R₂ is H or a C₁₋₄ lower alkyl group, said graft copolymer including at least about 0.5% bromine by weight of graft copolymer; and
(b) a homopolymer of said brominated monomeric units, said graft copolymer and said homopolymer together including at least about 1% bromine by weight of the overall polymer composition, which process comprises reacting an ethylene vinyl acetate copolymer with a ring brominated vinyl aromatic monomer having the formula: 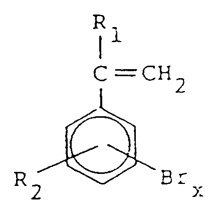 wherein x = 1 to 4, R₁ is H or CH₃, and R₂ is H or a C₁₋₄ lower alkyl group.

8. The process of claim 7, which produces a flame retardant polymer composition containing at most about 3% by weight of unreacted brominated monomer corresponding to the brominated monomeric units.

9. The process of claim 7, which produces a flame retardant polymer composition containing from about 15% to about 45% bromine by weight of the overall polymer composition.

10. The process of claim 7, in which R₁ and R₂ are each hydrogen.

11. The process of claim 7, which produces a flame retardant polymer composition in which at least about 85% of said brominated monomeric units have formulae wherein x = 2, 3 or 4.

12. A process for the preparation of a flame retardant polymer composition blend which includes:
(i) ethylene vinyl acetate; and
(ii) a bromine-concentrated polymer composition, said bromine-concentrated polymer composition including about 10% to about 60% bromine by weight and including a graft copolymer represented by the formula: 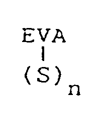 wherein n is greater than 1, EVA is an ethylene-vinyl acetate copolymer, and S is a grafted side chain having brominated monomeric units of the formula: 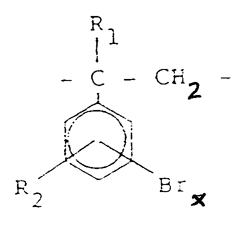 wherein x = 1 to 4, R₁ is H or CH₃, and R₂ is H or a C₁₋₄ lower alkyl group, said graft copolymer including at least about 5% bromine by weight of graft copolymer, said polymer composition containing at least about 1% bromine by weight of the overall polymer composition, which process comprises reacting an ethylene vinyl acetate copolymer with ring brominated vinyl aromatic monomer having the formula: 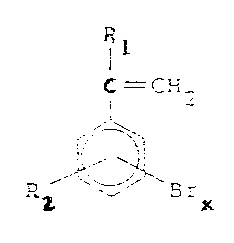 wherein x = 1 to 4, R₁ is H or CH₃, and R₂ is H or a C₁₋₄ lower alkyl group to produce the bromine concentrated polymer composition, and blending said bromine concentrated polymer composition with additional ethylene vinyl acetate.

13. The process of claim 12, which produces a flame retardant polymer composition containing from about 5% to about 50% bromine by weight of the overall polymer composition.

14. The process of claim 12, which produces a flame retardant polymer composition containing a homopolymer of said brominated monomeric units, the graft copolymer and the homopolymer together providing the about 10% to about 60% by weight bromine of the bromine-concentrated polymer composition.

15. The process of claim 14 in which R₁ and R₂ are each H.

## Patentansprüche (Patentansprüche für folgende(n) Vertragsstaat(en): AT, BE, CH, DE, DK, FR, GB, GR, IT, LI, LU, NL, SE)

1. Flammhemmende Polymerzusammensetzung, die ein Pfropfcopolymer mit der folgenden Formel umfaßt: 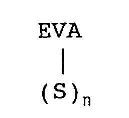 worin n > 1, EVA ein Ethylen-Vinylacetat-Copolymer und S eine aufgepfropfte Seitenkette mit bromierten monomeren Grundeinheiten der folgenden Formel ist: 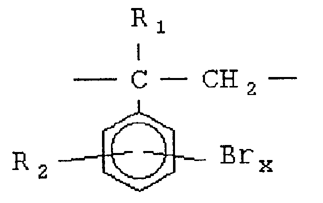 worin x = 1 bis 4, R₁ H oder CH₃ und R₂ H oder eine niedere C₁₋₄-Alkylgruppe ist, wobei das Pfropfcopolymer mindestens circa 1 Gew.-% Brom bezogen auf das Pfropfcopolymer einschließt.

2. Flammhemmende Polymerzusammensetzung nach Anspruch 1, die circa 1 Gew.-% bis circa 60 Gew.-% Brom umfaßt.

3. Flammhemmende Polymerzusammensetzung nach Anspruch 2, die circa 15 Gew.-% bis circa 45 Gew.-% Brom umfaßt.

4. Flammhemmende Polymerzusammensetzung nach Anspruch 1, die höchstens circa 3 Gew.-% unreagiertes bromiertes Monomer enthält, das den bromierten monomeren Grundeinheiten entspricht.

5. Flammhemmende Polymerzusammensetzung nach Anspruch 1, in der R₁ und R₂ jeweils Wasserstoff sind.

6. Flammhemmende Polymerzusammensetzung nach Anspruch 1, in der mindestens circa 80% der bromierten monomeren Grundeinheiten Formeln haben, worin x = 2 ist.

7. Flammhemmende Polymerzusammensetzung, die folgendes umfaßt:
a) Ein Pfropfcopolymer, das durch die folgende Formel dargestellt wird: 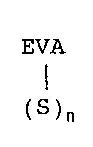 worin n > 1, EVA ein Ethylen-Vinylacetat-Copolymer und S eine aufgepfropfte Seitenkette mit bromierten monomeren Grundeinheiten der folgenden Formel ist: 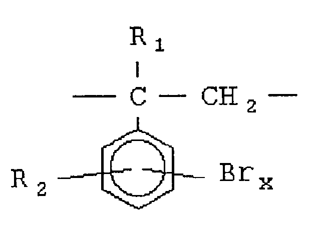 worin x = 1 bis 4, R₁ H oder CH₃ und R₂ H oder eine niedere C₁₋₄-Alkylgruppe ist, wobei das Pfropfcopolymer mindestens circa 0,5 Gew.-% Brom bezogen auf das Pfropfcopolymer einschließt; und
(b) ein Homopolymer der bromierten monomeren Grundeinheiten, wobei das Pfropfcopolymer und das Homopolymer zusammen mindestens circa 1 Gew.-% Brom bezogen auf die Gesamtpolymerzusammensetzung einschließen.

8. Flammhemmende Polymerzusammensetzung nach Anspruch 7, die höchstens circa 3 Gew.-% unreagiertes bromiertes Monomer enthält, das den bromierten monomeren Grundeinheiten entspricht.

9. Flammhemmende Polymerzusammensetzung nach Anspruch 7, die circa 15 Gew.-% bis circa 45 Gew.-% Brom bezogen auf die Gesamtpolymerzusammensetzung umfaßt.

10. Flammhemmende Polymerzusammensetzung nach Anspruch 7, in der R₁ und R₂ jeweils Wasserstoff sind.

11. Flammhemmende Polymerzusammensetzung nach Anspruch 7, in der mindestens circa 85% der bromierten monomeren Grundeinheiten Formeln haben, worin x = 2, 3 oder 4 ist.

12. Flammhemmende Polymerzusammensetzung, die eine Mischung aus folgendem umfaßt:
(i) Ethylen-Vinylacetat; und
(ii) eine mit Brom angereicherte Polymerzusammensetzung, wobei die mit Brom angereicherte Polymerzusammensetzung circa 10 Gew.-% bis circa 60 Gew.-% Brom einschließt und ein Pfropfcopolymer einschließt, das durch die folgende Formel dargestellt wird: 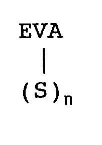 worin n > 1, EVA ein Ethylen-Vinylacetat-Copolymer und S eine aufgepfropfte Seitenkette mit bromierten monomeren Grundeinheiten der folgenden Formel ist: 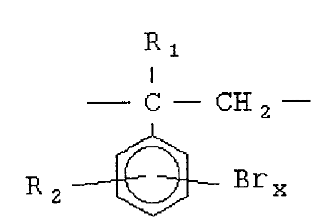 worin x = 1 bis 4, R₁ H oder CH₃ und R₂ H oder eine niedere C₁₋₄-Alkylgruppe ist, wobei das Pfropfcopolymer mindestens circa 5 Gew.-% Brom bezogen auf das Pfropfcopolymer einschließt, wobei die Polymerzusammensetzung mindestens circa 1 Gew.-% Brom bezogen auf die Gesamtpolymerzusammensetzung enthält.

13. Flammhemmende Polymerzusammensetzung nach Anspruch 12, die circa 5 Gew.-% bis circa 50 Gew.-% Brom bezogen auf die Gesamtpolymerzusammensetzung einschließt.

14. Flammhemmende Polymerzusammensetzung nach Anspruch 12, in der die mit Brom angereicherte Polymerzusammensetzung auch ein Homopolymer mit den bromierten monomeren Grundeinheiten einschließt, wobei das Pfropfcopolymer und das Homopolymer zusammen die circa 10 Gew.-% bis circa 60 Gew.-% Brom bezogen auf die mit Brom angereicherte Polymerzusammensetzung bereitstellen.

15. Flammhemmende Polymerzusammensetzung nach Anspruch 14, in der R₁ und R₂ jeweils H sind.

## Patentansprüche (Patentansprüche für folgende(n) Vertragsstaat(en): ES)

1. Verfahren zur Herstellung einer flammhemmenden Polymerzusammensetzung, die ein Pfropfcopolymer mit der folgenden Formel umfaßt: 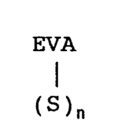 worin n größer als 1, EVA ein Ethylen-Vinylacetat-Copolymer und S eine aufgepfropfte Seitenkette mit bromierten monomeren Grundeinheiten der folgenden Formel ist: 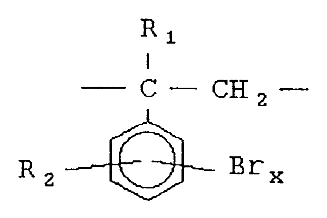 worin x = 1 bis 4, R₁ H oder CH₃ und R₂ H oder eine niedere C₁₋₄-Alkylgruppe ist, wobei das Pfropfcopolymer mindestens circa 1 Gew.-% Brom bezogen auf das Pfropfcopolymer einschließt, wobei das Verfahren das Umsetzen eines Ethylen-Vinylacetat-Copolymers mit einem im Ring brominierten aromatischen Vinylmonomer mit der folgenden Formel umfaßt: 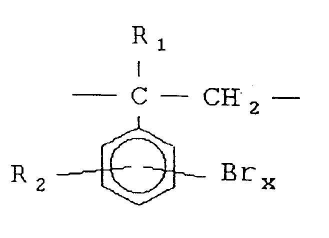 worin x = 1 bis 4, R, H oder CH₃ und R₂ H oder eine niedere C₁₋₄-Alkylgruppe ist.

2. Verfahren nach Anspruch 1, das eine flammhemmende Polymerzusammensetzung erzeugt, die circa 1 Gew.-% bis circa 60 Gew.-% Brom umfaßt.

3. Verfahren nach Anspruch 2, das eine flammhemmende Polymerzusammensetzung erzeugt, die circa 15 Gew.-% bis circa 45 Gew.-% Brom umfaßt.

4. Verfahren nach Anspruch 1, das eine flammhemmende Polymerzusammensetzung erzeugt, die höchstens circa 3 Gew.-% unreagiertes bromiertes Monomer enthält, das den bromierten monomeren Grundeinheiten entspricht.

5. Verfahren nach Anspruch 1, das eine flammhemmende Polymerzusammensetzung erzeugt, in dem R₁ und R₂ jeweils Wasserstoff sind.

6. Verfahren nach Anspruch 1, das eine flammhemmende Polymerzusammensetzung erzeugt, in der mindestens circa 80% der bromierten monomeren Grundeinheiten Formeln haben, worin x = 2 ist.

7. Verfahren zur Herstellung einer flammhemmenden Polymerzusammensetzung, die folgendes umfaßt:
a) Ein Pfropfcopolymer, das durch die folgende Formel dargestellt wird: 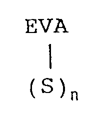 worin n größer als 1, EVA ein Ethylen-Vinylacetat-Copolymer und S eine aufgepfropfte Seitenkette mit bromierten monomeren Grundeinheiten der folgenden Formel ist: 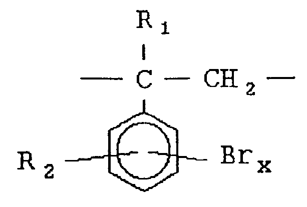 worin x = 1 bis 4, R₁ H oder CH₃ und R₂ H oder eine niedere C₁₋₄-Alkylgruppe ist, wobei das Pfropfcopolymer mindestens circa 0,5 Gew.-% Brom bezogen auf das Pfropfcopolymer einschließt; und
(b) ein Homopolymer der bromierten monomeren Grundeinheiten, wobei das Pfropfcopolymer und das Homopolymer zusammen mindestens circa 1 Gew.-% Brom bezogen auf die Gesamtpolymerzusammensetzung einschließen, wobei das Verfahren das Umsetzen eines Ethylen-Vinylacetat-Copolymers mit einem im Ring brominierten aromatischen Vinylmonomer mit der folgenden Formel umfaßt: 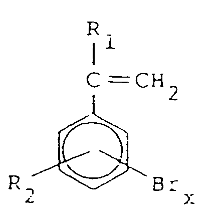 worin x = 1 bis 4, R, H oder CH₃ und R₂ H oder eine niedere C₁₋₄-Alkylgruppe ist.

8. Verfahren nach Anspruch 7, das eine flammhemmende Polymerzusammensetzung erzeugt, die höchstens circa 3 Gew.-% unreagiertes bromiertes Monomer enthält, das den bromierten monomeren Grundeinheiten entspricht.

9. Verfahren nach Anspruch 7, das eine flammhemmende Polymerzusammensetzung erzeugt, die circa 15 Gew.-% bis circa 45 Gew.-% Brom bezogen auf die Gesamtpolymerzusammensetzung umfaßt.

10. Verfahren nach Anspruch 7, das eine flammhemmende Polymerzusammensetzung erzeugt, in dem R₁ und R₂ jeweils Wasserstoff sind.

11. Verfahren nach Anspruch 7, das eine flammhemmende Polymerzusammensetzung erzeugt, in der mindestens circa 85% der bromierten monomeren Grundeinheiten Formeln haben, worin x = 2, 3 oder 4 ist.

12. Verfahren zur Herstellung einer flammhemmenden Polymerzusammensetzung-Mischung, die folgendes umfaßt:
(i) Ethylen-Vinylacetat; und
(ii) eine mit Brom angereicherte Polymerzusammensetzung, wobei die mit Brom angereicherte Polymerzusammensetzung circa 10 Gew.-% bis circa 60 Gew.-% Brom einschließt und ein Pfropfcopolymer einschließt, das durch die folgende Formel dargestellt wird: 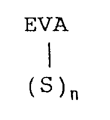 worin n größer als 1, EVA ein Ethylen-Vinylacetat-Copolymer und S eine aufgepfropfte Seitenkette mit bromierten monomeren Grundeinheiten der folgenden Formel ist: 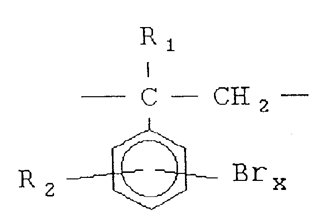 worin x = 1 bis 4, R₁ H oder CH₃ und R₂ H oder eine niedere C₁₋₄-Alkylgruppe ist, wobei das Pfropfcopolymer mindestens circa 5 Gew.-% Brom bezogen auf das Pfropfcopolymer einschließt, wobei die Polymerzusammensetzung mindestens circa 1 Gew.-% Brom bezogen auf die Gesamtpolymerzusammensetzung enthält, wobei das Verfahren das Umsetzen eines Ethylen-Vinylacetat-Copolymers mit einem im Ring brominierten aromatischen Vinylmonomer mit der folgenden Formel: 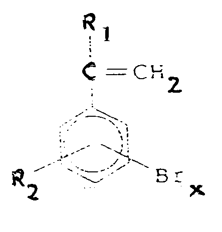 worin x = 1 bis 4, R, H oder CH₃ und R₂ H oder eine niedere C₁₋₄-Alkylgruppe ist, um die mit Brom angereicherte Polymerzusammensetzung zu erzeugen, und das Mischen der mit Brom angereicherten Polymerzusammensetzung durch zusätzliches Ethylen-Vinylacetat umfaßt.

13. Verfahren nach Anspruch 12, das eine flammhemmende Polymerzusammensetzung erzeugt, die circa 5 Gew.-% bis circa 50 Gew.-% Brom bezogen auf die Gesamtpolymerzusammensetzung enthält.

14. Verfahren nach Anspruch 12, das eine flammhemmende Polymerzusammensetzung erzeugt, die ein Homopolymer mit den bromierten monomeren Grundeinheiten enthält, wobei das Pfropfcopolymer und das Homopolymer zusammen die circa 10 Gew.-% bis circa 60 Gew.-% Brom bezogen auf die mit Brom angereicherte Polymerzusammensetzung bereitstellen.

15. Verfahren nach Anspruch 14, in dem R₁ und R₂ jeweils H sind.

## Revendications (Revendications pour l'(les) Etat(s) contractant(s) suivant(s): AT, BE, CH, DE, DK, FR, GB, GR, IT, LI, LU, NL, SE)

1. Composition polymère ignifuge comprenant un coolymère greffé répondant à la formule : 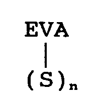 dans laquelle n est > 1, EVA représente un copolymère d'éthylène-acétate de vinyle, et S est une chaîne latérale greffée possédant des unités monomères bromées de formule : 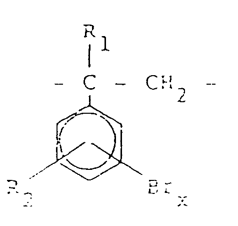 dans laquelle x = 1 à 4, R₁ représente H ou CH₃, et R₂ représente H ou un groupe alkyle inférieur en C₁-C₄, ledit copolymère greffé englobant au moins environ 1% de brome en poids du copolymère greffé.

2. Composition polymère ignifuge selon la revendication 1 et comprenant d'environ 1% à environ 60% en poids de brome.

3. Composition polymère ignifuge selon la revendication 2 et comprenant d'environ 15% à environ 45% en poids de brome.

4. Composition polymère ignifuge selon la revendication 1, contenant au maximum environ 3% en poids de monomère bromé n'ayant pas réagi correspondant aux unités monomères bromées.

5. Composition polymère ignifuge selon la revendication 1, dans laquelle R₁ et R₂ représentent chacun un atome d'hydrogène.

6. Composition polymère ignifuge selon la revendication 1, dans laquelle au moins environ 80% desdites unités monomères bromées répondent à des formules dans lesquelles x = 2.

7. Composition polymère ignifuge comprenant :
(a) un copolymère greffé représenté par la formule : 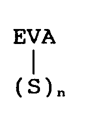 dans laquelle n est > 1, EVA représente un copolymère d'éthylène-acétate de vinyle, et S est une chaîne latérale greffée possédant des unités monomères bromées de formule : 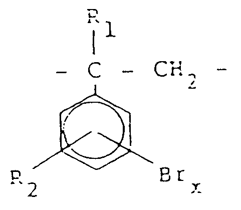 dans laquelle x = 1 à 4, R₁ représente H ou CH₃, et R₂ représente H ou un groupe alkyle inférieur en C₁-C₄, ledit copolymère greffé englobant au moins environ 0,5% de brome en poids du copolymère greffé ; et
(b) un homopolymère desdites unités monomères bromées, ledit copolymère greffé et ledit homopolymère englobant ensemble au moins environ 1% de brome en poids de la composition polymère totale.

8. Composition polymère ignifuge selon la revendication 7 et contenant au maximum environ 3% en poids de monomère bromé n'ayant pas réagi correspondant aux unités monomères bromées.

9. Composition polymère ignifuge selon la revendication 7 et comprenant d'environ 15% à environ 45% de brome en poids de la composition polymère totale.

10. Composition polymère ignifuge selon la revendication 7, dans laquelle R₁ et R₂ représentent chacun un atome d'hydrogène.

11. Composition polymère ignifuge selon la revendication 7, dans laquelle au moins environ 85% desdites unités monomères bromées répondent à des formules dans lesquelles x = 2, 3 ou 4.

12. Composition polymère ignifuge comprenant un mélange de :
(i) éthylène-acétate de vinyle ; et
(ii) une composition polymère concentrée au brome, ladite composition polymère concentrée au brome englobant d'environ 10% à environ 60% de brome en poids et englobant un copolymère greffé répondant à la formule : 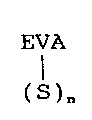 dans laquelle n est > 1, EVA représente un copolymère d'éthylène-acétate de vinyle, et S est une chaîne latérale greffée possédant des unités monomères bromées de formule : 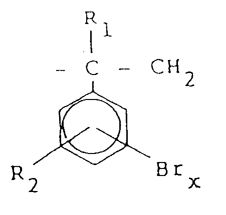 dans laquelle x = 1 à 4, R₁ représente H ou CH₃, et R₂ représente H ou un groupe alkyle inférieur en C₁-C₄, ledit copolymère greffé englobant au moins environ 5% de brome en poids du copolymère greffé, ladite composition polymère contenant au moins environ 1% de brome en poids de la composition polymère totale.

13. Composition polymère ignifuge selon la revendication 12 et qui englobe d'environ 5% à environ 50% de brome en poids de la composition polymère totale.

14. Composition polymère ignifuge selon la revendication 12, dans laquelle ladite composition polymère concentrée au brome englobe également un homopolymère possédant lesdites unités monomères bromées, ledit copolymère greffé et ledit homopolymère procurant ensemble la quantité d'environ 10% à environ 60% en poids de brome de la composition polymère concentrée au brome.

15. Composition polymère ignifuge selon la revendication 14, dans laquelle R₁ et R₂ représentent chacun H.

## Revendications (Revendications pour l'(les) Etat(s) contractant(s) suivant(s): ES)

1. Procédé pour la préparation d'une composition polymère ignifuge comprenant un copolymère greffé répondant à la formule : 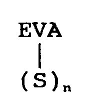 dans laquelle n est supérieur à 1, EVA représente un copolymère d'éthylène-acétate de vinyle, et S est une chaîne latérale greffée possédant des unités monomères bromées de formule : 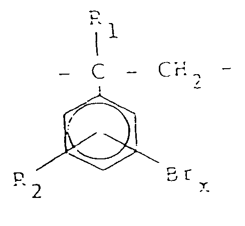 dans laquelle x = 1 à 4, R₁ représente H ou CH₃, et R₂ représente H ou un groupe alkyle inférieur en C₁-C₄, ledit copolymère greffé englobant au moins environ 1% de brome en poids du copolymère greffé, lequel procédé comprend la réaction d'un copolymère d'éthylène-acétate de vinyle avec un monomère aromatique de vinyle bromé dans le cycle et répondant à la formule : 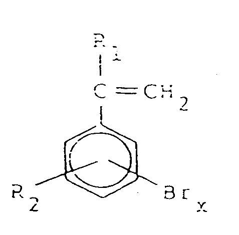 dans laquelle X=1 à 4, R₁ représente H ou CH₃, et R₂ représente H ou un groupe alkyle inférieur en C₁-C₄.

2. Procédé selon la revendication 1, qui produit une composition polymère ignifuge comprenant d'environ 1% à environ 60% en poids de brome.

3. Procédé selon la revendication 2, qui produit une composition polymère ignifuge comprenant d'environ 15% à environ 45% en poids de brome.

4. Procédé selon la revendication 1, qui produit une composition polymère ignifuge contenant au maximum environ 3% en poids de monomère bromé n'ayant pas réagi correspondant aux unités monomères bromées.

5. Procédé selon la revendication 1, dans lequel R₁ et R₂ représentent chacun un atome d'hydrogène.

6. Procédé selon la revendication 1, qui produit une composition polymère ignifuge dans laquelle au moins environ 80% desdites unités monomères bromées répondent à des formules dans lesquelles x = 2.

7. Procédé pour la préparation d'une composition polymère ignifuge comprenant :
(a) un copolymère greffé représenté par la formule : 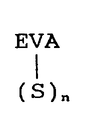 dans laquelle n est supérieur à 1, EVA représente un copolymère d'éthylène-acétate de vinyle, et S est une chaîne latérale greffée possédant des unités monomères bromées de formule : 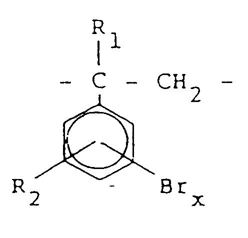 dans laquelle x = 1 à 4, R₁ représente H ou CH₃, et R₂ représente H ou un groupe alkyle inférieur en C₁-C₄, ledit copolymère greffé englobant au moins environ 0,5% de brome en poids du copolymère greffé ; et
(b) un homopolymère desdites unités monomères bromées, ledit copolymère greffé et ledit homopolymère englobant ensemble au moins environ 1% de brome en poids de la composition polymère totale, lequel procédé comprend la réaction d'un copolymère d'éthylène-acétate de vinyle avec un monomère aromatique de vinyle bromé dans le cycle et répondant à la formule : 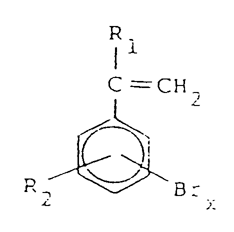 dans laquelle X=1 à 4, R₁ représente H ou CH₃, et R₂ représente H ou un groupe alkyle inférieur en C₁-C₄.

8. Procédé selon la revendication 7, qui produit une composition polymère ignifuge contenant au maximum environ 3% en poids de monomère bromé n'ayant pas réagi correspondant aux unités monomères bromées.

9. Procédé selon la revendication 7, qui produit une composition polymère ignifuge comprenant d'environ 15% à environ 45% de brome en poids de la composition polymère totale.

10. Procédé selon la revendication 7, dans lequel R₁ et R₂ représentent chacun un atome d'hydrogène.

11. Procédé selon la revendication 7, qui produit une composition polymère ignifuge dans laquelle au moins environ 85% desdites unités monomères bromées répondent à des formules dans lesquelles x = 2, 3 ou 4.

12. Procédé pour la préparation d'un mélange d'une composition polymère ignifuge comprenant :
(i) éthylène-acétate de vinyle ; et
(ii) une composition polymère concentrée au brome, ladite composition polymère concentrée au brome englobant d'environ 10% à environ 60% de brome en poids et englobant un copolymère greffé répondant à la formule : 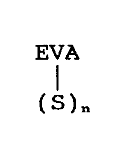 dans laquelle n est supérieur à 1, EVA représente un copolymère d'éthylène-acétate de vinyle, et S est une chaîne latérale greffée possédant des unités monomères bromées de formule : 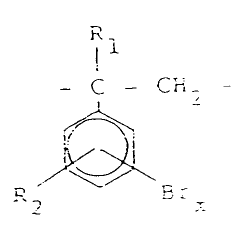 dans laquelle x = 1 à 4, R₁ représente H ou CH₃, et R₂ représente H ou un groupe alkyle inférieur en C₁-C₄, ledit copolymère greffé englobant au moins environ 5% de brome en poids du copolymère greffé, ladite composition polymère contenant au moins environ 1% de brome en poids de la composition polymère totale qui produit une composition polymère ignifuge, lequel procédé comprend la réaction d'un copolymère d'éthylène-acétate de vinyle avec un monomère aromatique de vinyle bromé dans le cycle et répondant à la formule : 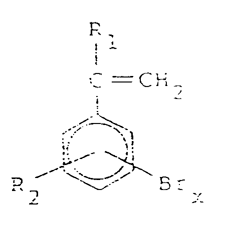 dans laquelle X=1 à 4, R₁ représente H ou CH₃, et R₂ représente H ou un groupe alkyle inférieur en C₁-C₄, et le mélange de ladite composition polymère concentrée au brome avec de l'éthylène-acétate de vinyle supplémentaire.

13. Procédé selon la revendication 12, qui produit une composition polymère ignifuge qui contient d'environ 5% à environ 50% de brome en poids de la composition polymère totale.

14. Procédé selon la revendication 12, qui produit une composition polymère ignifuge contenant également un homopolymère desdites unités monomères bromées, ledit copolymère greffé et ledit homopolymère procurant ensemble la quantité d'environ 10% à environ 60% en poids de brome de la composition polymère concentrée au brome.

15. Procédé selon la revendication 14, dans lequel R₁ et R₂ représentent chacun H.
